# EUROPEAN PATENT APPLICATION

(11) **EP 3 091 788 A1**
(43) Date of publication of application: **09.11.2016**
(21) Application number: 15166285.5
(22) Date of filing: 04.05.2015
(51) Int. Cl.: H04W 48/00, H04W 4/00, H04W 48/12, H04W 48/16, H04W 52/00, H04W 48/10

(54) **METHOD FOR RECEIVING INFORMATION IN A WIRELESS CELLULAR NETWORK**

(71) Applicant: Gemalto M2M GmbH, 81541 München (DE)
(72) Inventor: Breuer, Volker, 16727 Boetzow (DE); Wehmeier, Lars, 14612 FAlkensee (DE); Ulrich, Thomas, 67098 Bad Dürkheim (DE)
(74) Representative: Grevin, Emmanuel

(57) **Abstract**

The present invention relates to a method for receiving system information by a user equipment from a base station, the user equipment being a limited-bandwidth device, camping on the base station, the base station being part of a wireless cellular network,
wherein the system information are divided in a plurality of system information blocks, which each is at least once transmitted by the base station during one broadcast channel modification period,
the method comprising the step for the user equipment of:
- receiving initially the system information,
- storing data related to said system information,

after a period of at least one broadcast channel modification period without reception of system information:
- determining start of broadcast channel modification period considering said stored data, and
- determining start of reading system information in relation to said start of the broadcast channel modification period.

## Description

### FIELD OF THE INVENTION

The present invention relates to a method for transmitting information from a base station to a user equipment.
The invention also pertains to a base station using said method. The invention further relates to a user equipment configured to receive information transmitted using said method.

### BACKGROUND OF THE INVENTION

The cellular standards, in particular those supporting long term evolution (LTE) standard, are beginning to face the fact that different types of user equipment are operating within the wireless cellular networks. A special interest is directed to so-called machine-type communication (MTC) devices, which behave differently than mobile handsets.
As part of the standardization activities in Release 13 for such MTC devices special channels and information blocks are foreseen.
One of the key elements is the definition of system information blocks (SIB). As part of that system information blocks dedicated for MTC devices (M-SIBs) are suggested. System information is known to be distributed in different system information blocks, which are transmitted during one broadcast channel modification period.

Further MTC devices are separated in low complexity and low complexity devices with Enhanced Coverage UEs. Low complexity is achieved by placing in bandwidth reception capabilities lower demands than for normal devices, i.e. those devices are only required to receive 1,4MHz radio frequency bandwidth. The low complexity devices for enhanced coverage are characterized that they are receiving or transmitting information in a repetitive manner and the receiver performing coherent average so that additional reception gain is achieved i.e. these are also low complexity devices applying coverage enhancements techniques. These two categories of devices are defined in specification 3GPP TR 36.888 V12.0.0, which content is incorporated here by reference.
Both of these types of devices address different use cases and hence place different burdens on the SIB handling. It is in particular preferable to address both types of devices with one common set of M-SIBs.
The enhanced coverage devices typically considered as meters are static/semi-static and gain their enhanced coverage by repetitive reading of the related information. This is also applicable for the SIBs itself. The number of repetitions for enhanced coverage may be very high, which leads to high latencies for receiving of all system information in an UE. Times of 10,24s are assumed to be acceptable for these devices.

On the other hand generally SIB1 needs to be read in order to know if in at least one of the other system information blocks a change has happened, which is indicated by the so-called BCCH value tag. For enhanced coverage devices it is by now a challenge to successfully decode the SIB1 let alone the whole system information during one broadcast channel modification period.

However, it is not only the latency but also the corresponding reading time and consequently the battery consumption which causes an inappropriate operation of such devices. In particular repetitive reading during operation for e.g. acquiring the BCCH value tag or even the entire SIB structure leads to additional power consumption. This is in particular true in case of SIB reading operations of the UEs which are in vain, due to the fact that the SIB1-reading could not be finished during the broadcast channel modification period.

It is therefore the goal of present invention to overcome the mentioned disadvantages and to propose a solution for an improved reception of system information transmitted from a base station at a user equipment.
Further alternative and advantageous solutions would, accordingly, be desirable in the art.

### SUMMARY OF THE INVENTION

For this it is according to a first aspect of the invention suggested a method for receiving system information by a user equipment according to claim 1. It is further suggested according to a second aspect of the invention a user equipment according to claim 10.

According to the first aspect it is proposed a method for receiving system information by a user equipment from a base station, the user equipment being a limited-bandwidth device, camping on the base station, the base station being part of a wireless cellular network,
wherein the system information are divided in a plurality of system information blocks, which each is at least once transmitted by the base station during one broadcast channel modification period,
the method comprising the step for the user equipment of:
- receiving initially the system information,
- storing data related to said system information,
after a period of at least one broadcast channel modification period without reception of system information:
- determining start of broadcast channel modification period considering said stored data, and
- determining start of reading system information in relation to said start of the broadcast channel modification period.

The invention is based on the commonly known architecture of wireless cellular networks according to technology standards like GSM, UMTS and LTE. As part of that, the base stations, resp. NodeB or eNodeB, transmit in a dedicated broadcast channel a defined collection of system information to the user equipments (UEs) which are operating with the respective base station. This operation relationship is known as camping of the user equipment on a base station.

According to recent development it is foreseen to take into account the existence of limited-bandwidth devices. These UEs form a special class of devices - in particular machine type communication devices - which comprise fewer resources for operating in the wireless cellular network, and are generally operating in a different manner than mobile handsets. Typically limited-bandwidth devices are a subset of low complexity devices.
The system information provided by the base station to the UEs is known to be submitted in several blocks, the System Information Blocks (SIB). Typically the normal user equipment reads the first SIB - the SIB1. The SIB1 in particular comprises information including the BCCH value tag. This BCCH value tag - in the following simple named value tag - allows for the UE to derive whether the content of one of the SIBs has changed since the last broadcast channel modification period. Based on that information the user equipment continues to read the rest of the system information blocks transmitted by the base station.
It is further known that limited-bandwidth devices might be situated in places with only a comparably reduced receivable signaling power from the base station, where the UE is currently camping on. Such limited-bandwidth devices are called enhanced coverage devices, and they are able to compensate the reduced signaling power by repeating to read the signals, in order to get sufficient coverage gain.

The system information blocks are completely transmitted during a broadcast channel modification period. When the SIB1 indicates with the BCCH value tag that no modification has happened, this status lasts for one broadcast channel modification period.
In dependency of the size of the SIBs and the broadcast channel modification period it can happen for enhanced coverage devices, that the repetitive reading of the SIBs or even the SIB1 does not finish during one broadcast channel modification period. This is in particular the case due to two situations:
a) the reading started not close enough to the beginning of the broadcast channel modification period
b) the reading time is larger than the broadcast channel modification period.
The first situation means unnecessary reading efforts, hence power consumption invested in vain.
The second situation means, that when the system information are completely read, the next broadcast channel modification period has already started. Therefore the information from the SIBs may already be outdated. It is known that for enhanced coverage devices that already the reading of the current SIB1 requires up to 500 repetitions and thus lasts up to 10 seconds. Hence for a couple of configurations the broadcast channel modification period is not long enough for reading a full SIB1 for enhanced coverage devices.

In order to solve that issue it is proposed for the UE to generally take a two step approach. The first step includes an initialization of received system information, the second and later step takes advantage of the results stored within the first step.
As part of the first steps it is foreseen at an earlier point in time to once receive the full set of system information and store at least a part of the received information. With this, the user equipment has available the key information about the broadcast channel modification period, in particular the length and the starting point. The latter is typically given as a system frame number (SFN) and an offset.
It is in particular proposed that the step of initially receiving system information is conducted in conjunction with at least one out of the group of:
- camping of the user equipment on the base station,
- registration of the user equipment in the wireless cellular network,
- starting up of the user equipment, and/or
- waking up of the user equipment from dormant mode.
According to that embodiment the initial receiving of system information is started once a certain event occurred. Those events are in particular related to the beginning of the operation of the user equipment with the current base station.
In the first option it is about when the user equipment starts camping on the base station. Each base station has its individual broadcast channel modification period, hence it is advantageous when a change of the base station is conducted to again receive initially the complete system information of the base station where the UE is now camping on. The base station the UE is camping on is called the active base station.
As the second option a registration in the wireless cellular network of the active base station is triggering the initial reception of the system information. This is typically happening when it is powered on or when a change of the wireless cellular network and/or radio access network is executed. Alternatively or additionally the triggering event is a starting up of the user equipment, where the system information is received once receivable.
The final preferred option relates to the waking up of the user equipment, in particular from dormant mode. To receive the system information from a base station does not require a registration or camping on the base station, hence after waking up, the user equipment is able to receive the system information.
Preferably the user equipment decides about camping on the base station in dependence on the received system information. In particular if the detected broadcast channel modification period is shorter than the time the user equipment needs to receive the complete set of system information - which might be the case for enhanced coverage devices - it is advantageous to camp on another base station with better conditions in that sense, if available. This may be the case due to the possibility to configure the size of the broadcast modification period in accordance to the level of coverage enhancement by the base station. A base station may not be configured especially for paging and dedicated signaling of the repetitions required by the enhanced coverage device up to the maximum of coverage enhancement.

That means, the system information from the other base station is either read faster or the broadcast channel modification period is longer, or supporting higher coverage enhancement or any combination thereof.

As a result of the first step, the user equipment has available in its storage unit a representation of the up to date system information received from the active base station.
For the following operations the user equipment is configured to refer to the stored data and adapt the subsequent network operations based on these data.
That means that after a certain break, lasting at least another broadcast channel modification period, the user equipment determines the start of another broadcast channel modification period and when to read system information.
The break is in particular indicated by the fact, when it is needed to read the whole set of system information again. This is typically the case when either the system information have changed, or a data transmission is about to be launched. In the time in between no reception of the system information is preferably executed, which is advantageous in terms of power consumption. Once the user equipment decides or is urged to read system information again, it then accesses the stored data.
Based on paging cycle and system frame number (SFN) received by means of the system information the user equipment determines the start of a - in particular the next - broadcast channel modification period in terms of an SFN offset compared to the current SFN.
When the start of the broadcast channel modification period is determined the user equipment is further configured to determine when to start reading the system information. In particular this point in time is selected that way, that it is located after the start of the next broadcast channel modification period, and the user equipment is able to finish reading the system information before the end of the respective broadcast channel modification period.

It is preferable proposed a method further comprising the step for the user equipment of determining the duration of receiving the system information, and further considering for determination of the start of reading system information further said duration of receiving the system information.
With the time needed for receiving the system information the user equipment has an indication how long after a start of the broadcast channel modification period the user equipment will successfully finish reading the system information. This duration is preferably used for determining the start of reading the system information.
Said duration of receiving the system information in particular depends upon the repetitions conducted by the user equipment for gaining sufficient confidence in decoding of the system information.
For enhanced coverage devices a number of repetitions of reading the broadcast from the active base station is needed. The number of repetitions is individual for each user equipment. The user equipment decides that sufficient repetitions are carried out, when a confidence level was reached, that the broadcast information data are correctly received.
The information about the repetitions and/or time until the sufficient confidence level in decoding the system information is reached is in particular known to the user equipment from the first step of initial receiving the system information. Hence, it is stored following the initial reception of the system information.
Hence, when the user equipment has available the point in time of the start of the current broadcast channel modification period, the duration of the broadcast channel modification period and the duration of successfully receiving the system information, it is able to detect if an immediate start of receiving the system information would end prior to the end of the current broadcast channel modification period. If this is not the case, the start of receiving the system is determined differently.

In another advantageous embodiment it is proposed a method further comprising the step of determining the start time of a first data transmission by the user equipment considering the determined start of broadcast channel modification period.
According to this embodiment, it is foreseen that the user equipment further determines the start of a first data transmission. This is in particular advantageous for the case that the user equipment conducts the previous steps due to the fact that the envisaged data transmission is about to be carried out. Consequently the respective data transmission is further conducted in dependence of the determined start of the broadcast channel modification period. It is in particular further conducted depending on the determined start of the reception of the system information and the determined duration of reading the system information.
The start of the data transmission is preferably carried out between the end of the reception of the system information and the next start of a broadcast channel modification period. It is advantageous to start a data transmission within the same broadcast channel modification period than the previously executed reading of the system information, in particular due to information received through the system information. One reason for that is to be sure that no barring indicator is set.
Moreover the determination of the start of the reception of system information preferably takes into account the envisaged data transmission. In particular when the data transmission consists of comparably small data packets, it is advantageous to carry out the system information reception and the whole data transmission during one broadcast channel modification period.

In an in particular advantageous embodiment it is proposed that the determination of the start of reading system information comprises shifting said reading allowing completion of reading of said system information within a single broadcast channel modification period.
This embodiment means in particular that the determination of the start of reading is shifted after the next start of a broadcast channel modification period, hence the start of reading is delayed beyond that point in time However, it is further part of this concept to shift the start of reading system information ahead. This is in particular advantageous for a planned scheduling of activities where a reading of system information is related to. This is in particular the case for a data transmission. This means when a data transmission is scheduled for a certain point in time, then the reading of system information and/or the actual start of the data transmission is preferably shifted in relationship to the start of a broadcast channel modification period. With that it is achieved that in dependence of the actually detected start of the broadcast channel modification period only once the system information need to be read, at least parts of it. Those parts of the system information comprise in particular one or a few system information blocks which include information concerning an access barring for certain type(s) of devices or similar access limitations. Further the user equipment is set in the position to further control that the data transmission is started within the same broadcast channel modification period as the just mentioned reception of system information.
This embodiment is advantageous as it saves attempts of system information receptions and thus saves power.

Generally as part of this embodiment, the data transmission would be started right after the system information reception has ended. According to another advantageous embodiment it is proposed a method comprising for the user equipment the step of further considering for determining the first data transmission start time the duration of receiving the system information and a random value.
With this embodiment the start time for data transmission is further dependant from another parameter. This is advantageous as otherwise a plurality of user equipments situated within the same cell and with similar data reception conditions in terms of enhanced coverage would at the same time carry out their data transmission. The additional parameter is a random value which distributes the data transmissions over the remaining time within the broadcast channel modification period, but still assures that the data transmission is carried out in the same broadcast channel modification periods.
Preferably the broadcast channel modification period is split in several intervals, e.g. system frames or milliseconds. The user equipment preferably determines from the determined and/or stored duration of reading the system information and the duration of the broadcast channel modification period and in particular an estimated duration of data transmission, a plurality of said intervals which allow to start and/or finish the data transmission within the broadcast channel modification period. This results in a discrete number of intervals. With the random value, one of the intervals is chosen and the data transmission is started within this interval.
According to another advantageous embodiment it is proposed a method comprising for the user equipment the step of determining the start time of at least one second data transmission considering a time related to the start time of the first data transmission and a time related to the start time of a broadcast channel modification period.
This embodiment envisages the issue of carrying out more than one data transmission with an optimized power consumption footprint. In order to do so the start time of a second data transmission is determined taking into account both the start time of the first data transmission and the start time of a broadcast channel modification period, in particular the start time of the next broadcast channel modification period. Additionally the duration of the broadcast channel modification period and/or the start time of the previous broadcast channel modification period are preferably considered as well. The idea here is when a plurality of data transmissions are planned, then it is tried to achieve that with as few system information receptions as possible. The system information reception, in particular the reception of the SIB1 are necessary for each broadcast channel modification period where the UE is supposed to interact with the base station, in particular to conduct data transmissions.
In particular when the limited-bandwidth device was operated in a sleeping mode, probably the system information or parts thereof are received once, but then the pending data transmissions - e.g. transmission of sensor data and a request to a remote server for updates of parametrization etc. - are moved into the same broadcast channel modification period. This saves receiving system information.
Further data transmissions are handled accordingly, taking into account the start time of the previous data transmission.

Additionally or alternatively it is proposed a method wherein for determination of the start time of at least one of the first or second data transmission further considering the validity period of the stored system information.
Said validity period is defined by the wireless cellular network, which defines how long previously read system information are valid. Typically values submitted by means of the system information are rather stable. With the value tag in the SIB1 the system information indicates if any change has occurred since previously transmitted system information. So, when a user equipment reads system information and detects value tag a, but then activates a sleep mode, it generally just needs to read the SIB1 in order to figure out, if the value tag has changed. If no change has happened, that is the value tag is still a, the stored system information can be reused. Otherwise, when the value tag is a+x the stored system information is outdated and needs to be received again.
This procedure is modified by the validity period in that way that even if the SIB1 received after the sleep mode indicates an unchanged value tag, the system information need to be received completely again, should the validity period have expired.
According to the proposed embodiment it is hence advantageous if the start time of the first or second data transmission is taking the validity period in account. For this first the validity period is stored with the initially read system information and/or with the first data transmission, should it concern a later, in particular second, data transmission. The start time of the data transmission is adapted considering the stored validity period in that the user equipment shifts a planned data transmission ahead, to avoid expiration of the validity period. This is advantageous as with this embodiment avoidable system information reception efforts can be saved.
Further validity periods envisaged for different types of devices, in particular limited-bandwidth devices or MTC devices, are advantageous. For metering devices an increase up to 24h hours is advantageous as otherwise for each data transmissions system information needed to be completely read, as in any case the validity period have expired between two data transmissions. Further such validity periods, in particular for certain device types, are preferably provided with the system information. Hence, the user equipment has the up to date validity periods available from the previous reading of the complete set of system information blocks.

According to the second aspect of the invention it is suggested a user equipment configured for operating in camping relationship with a base station of a wireless cellular network, the user equipment being a limited-bandwidth device, and is configured to receive system information from the base station, the system information are divided in a plurality of system information blocks, which each is at least once transmitted by the base station during one broadcast channel modification period, the user equipment further comprising at least a storage unit, where the user equipment is further configured to:
- receive initially the system information,
- store data related to said system information in the storage unit,
after a period of at least one broadcast channel modification period without reception of system information:
- determine start of broadcast channel modification period considering said stored data, and
- determine start of reading system information in relation to said start of the broadcast channel modification period.

The user equipment is in particular a wireless communication device, preferably configured for machine-type communication. It is as limited-bandwidth device comprising fewer resources for operating in a wireless cellular network than other devices, including mobile handsets.
Further the user equipment comprises a storage unit. This is in particular a permanent memory like a flash memory. However it is also covered by the invention to use a volatile memory, such as operating memory for this task. Typically it is expected that after a restart of the user equipment from power-off mode, that all previously stored data need to be retrieved again. Nevertheless, some information, in particular the validity period depicting the maximum validity of system information, are stored permanently, while other - more volatile - information is stored in the operating memory.

The user equipment is configured to operate within a wireless cellular network, and for that is camping on a base station, which is then the active base station. Typically a change of the base station - be it by means of a reselection or a handover during an active connection - preferably leads to a new attempt to receive the system information broadcasted by the by then active base station.
In this situation this new attempt to receive the system information complies with the suggested initial receiving of system information, according to the proposed aspect of the invention.
However, after a period of at least one broadcast channel modification period the start of reading the system information the next time is dependent upon the start of the broadcast channel modification period.
Generally the second aspect of the invention shares the advantages of the first aspect.
In a preferred embodiment it is suggested that he user equipment further comprises a transceiver unit and a controlling unit, and wherein the controlling unit is configured to execute the determination of start time of reading system information and/or the determination of start time of a data transmission; and the transceiver unit is configured to execute the reading of system information and/or the reading of the data transmission.

According to that embodiment the user equipment comprises said units, which are configured to fulfill different tasks.
Generally a transceiver unit, in particular a receiver, is configured for carrying out all signaling operations with the base station via the air interface.
On the other hand the controlling unit is controlling the transceiver. As part of that task the controlling unit determines - based on system information broadcasts received by the transceiver unit and forwarded to the controlling unit - the start time of reading system information and/or of data transmission.

According a further advantageous embodiment it is proposed that the user equipment further comprises a control appliance, wherein the control appliance is configured to receive from the controlling unit information related to the determined start of the broadcast channel modification period and/or the validity period of said stored system information.
Typically for machine-type communication devices both units are part of a communication unit, in particular a wireless module.
A control appliance controls the wireless module. The control appliance provides via a defined interface, in particular the AT-interface or another command interface, controlling commands in terms of the command for data transmission etc. The control appliance is effectively the core of a device which is equipped with wireless connectivity by means of the wireless module. The control appliance therefore - at least by means of a user interface - knows the relevance and hence the required quality of service for a data transmissions. This includes in particular if the data transmission is momentary or is possible to be delayed. In particular when a remote server for retrieving sensor data is providing a point in time or a time window for submitting the sensor data, then the control appliance takes on those instructions and acts accordingly.
With the controlling unit, in particular as part of the communication unit, the proposed user equipment comprises an intermediate layer controlling the communication, including finding appropriate points in time for various operations, in particular receiving system information and/or transmitting data. Preferably the controlling unit fulfills further tasks as intermediary between the control appliance and the transceiver unit.
As part of that intermediary task the control unit is further providing information to the control appliance regarding the start of a broadcast channel modification period and/or the validity period. With that the control appliance is advantageously put in the position to provide instructions to the control unit if a power-aware operation is preferred rather to momentary traffic. This is in particular preferable as with each data transmission the preference may be different.
Effectively the control appliance is at least informally involved in the way the control unit is handling data transmissions and reception of system information.

As it is shown this invention advantageously solves the depicted problem and suggests a change that makes possible the operation of enhanced coverage devices with the base stations in a manner complying with power consumption objectives.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: shows exemplarily the architecture of an embodiment of a user equipment according to the invention;
- Fig. 2: shows a flow chart representing one embodiment of the inventive method;
- Fig. 3: represents schematically the reception of system information during two broadcast channel modification period;
- Fig. 4a/4b: represents schematically the reception of system information combined with a data transmission during a couple of broadcast channel modification period according to a preferred embodiment of the invention;
- Fig. 5a/5b: shows schematically the reception of system information combined with a data transmission during a couple of broadcast channel modification periods according to another exemplary embodiment of the invention;
- Fig. 6: represents a flow chart showing another embodiment of the inventive method considering validity periods;
- Fig. 7: represents schematically the shift of a data transmission with respect to a validity period of system information, according to another embodiment of the invention.

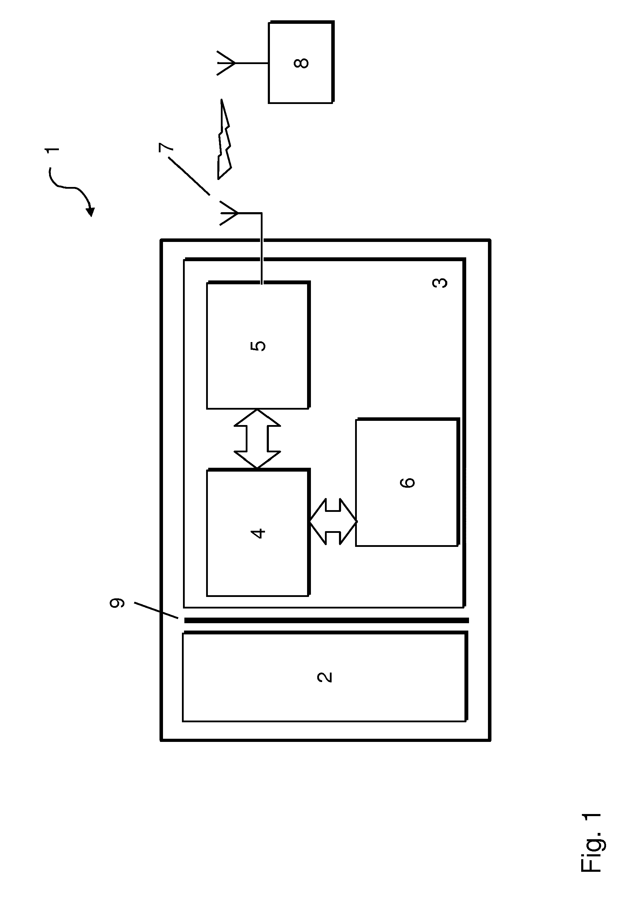

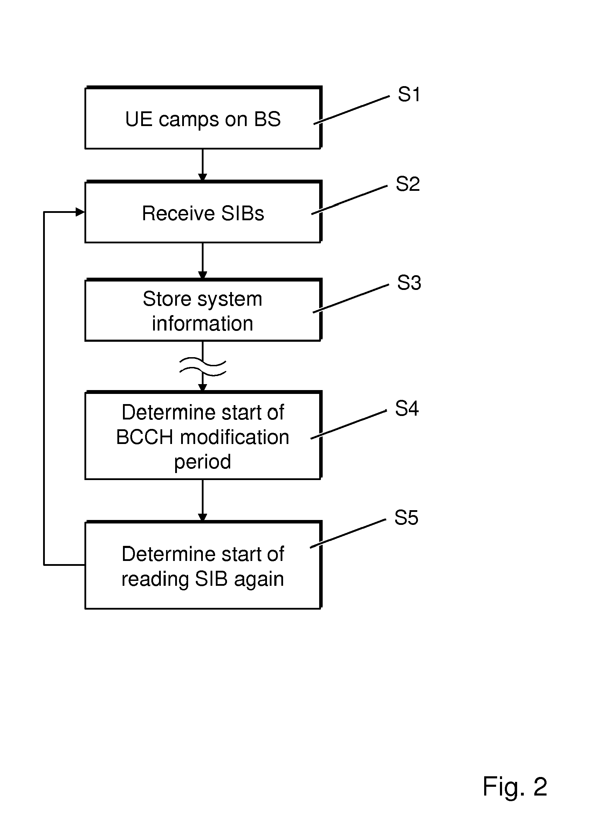

In Fig. 1 it is shown the general architecture of a user equipment 1 according to a preferred embodiment of the invention. The user equipment 1 is in this exemplifying embodiment a limited-bandwidth machine-type device, which generally comprises a control appliance 2 and a communication unit 3. The control appliance 2 typically controls the whole device, which is further managed by a user interface - if any - and incorporates the device specific intelligence. If the user equipment represents a metering device or a vending machine, the control appliance cares for all operations related to measuring by means of sensors resp. for vending beverages etc. As part of this task, the control appliance has the capability to connect to remote servers and - in the case of the metering device - send measuring data resp. sending - in case of the vending machine - information related to a need to refill or a request to credit card companies to check the credibility of a credit card used for buying offered beverages.
The connectivity of the user equipment 1 is provided by the communication unit 3. The control appliance 2 controls the connectivity by means of the command interface 9, which is typically an AT interface implementing the Hayes standard set of commands for controlling modems.
A typical chain of AT commands would open a connection with a remote server specified by its URL, send measured data as part of a payload data transmission and close the connection. Generally the control appliance assumes that each of the AT commands leads to an immediate interaction of the communication unit 3 with the communication bearer, in this case the wireless cellular network by means of the transceiver 5 and the antenna 7. The communication unit 3 is accepting the AT commands and takes the necessary steps for fulfilling the commands. The communication unit 3 comprises at least a control unit 4, the transceiver 5 and a storage unit 6 for storing received data.
The exemplary user equipment 1 has a special architecture, as here a control unit 4 is acting as intermediary unit within the communication unit 3. The communication unit 3 typically has objectives from the control appliance in terms of power consumption, but when the control appliance would in short succession effect short wireless cellular network accesses, reaching the objectives would be thwarted. Here a more elaborate solution according to the invention comes into play.
The general approach of the inventive method is shown in FIG. 2 in a flow chart.
This solution starts in step S1 with the user equipment resp. the communication unit 3 operating in conjunction with a base station 8 of the wireless cellular network, in other words the UE camps on base station 8.
As part of that the transceiver 5 receives in step S2 a complete set of system information from the base station 8. The system information is provided in a set of system information blocks (SIBs). Those SIBs are preferably SIBs which are dedicated to MTC devices and/or limited-bandwidth devices. Those SIBs are known as M-SIBs. As the inventive method works both with all types of SIBs, it is in the following only referred to SIBs, meaning all types of SIBs.

The initial step of reading the complete set of SIBs is preferably triggered by the camping of the UE at the current active BS. This is true for a just powered on UE and also for a first registration of the UE in the current wireless cellular network.
For enhanced coverage devices the full reception of the complete sets of SIBs takes a while. The duration is dependent from the place where the UE is located, and the reception conditions. The less power the UE receives in the respective frequency band, the more repetitions are needed. The UE repeats receiving until it gains sufficient confidence in decoding the system information.
In fact, the initial reception of system information may take longer than the current broadcast channel modification period. This is in particular due to the fact that according to network resp. base station configuration the broadcast channel modification period may take different times. When the broadcast channel modification period is passed, the system information needs to be received again. This is what is avoided for later occurrences through the inventive method.
Once the system information is completely received, a subset or the complete received data are stored in storage unit 6 in step S3. Storage unit 6 is preferably a permanent storage in particular a flash memory unit. Although after a powering down the system information need to be read again, it is advantageous if some data, in particular quasi-constant data like the validity period of system information are stored permanently.
When step S3 is concluded the user equipment 1 is operated in relationship with the base station 8 for a while. It is assumed that no data transmission is effected in the meantime. Data transmissions in this sense are both payload data sent to a remote server. However, also data transmissions as part of the mobility management, like neighbor cell measurements, are data transmissions in this sense.

At a special point in time, in particular after at least one broadcast channel modification period, the user equipment may want to read system information again.
This may be the case when a data transmission is about to be carried out. Alternatively this may be carried out, when the user equipment figures out that the stored system information data are outdated meanwhile.
One reason for that is when the validity period of the system information is expired. This is according to a network configuration the case after a predefined couple of hours. This means, that system information which were received earlier need to be read again, even if the value tag did not change. The value tag of the system information is another reason for reading the complete set of system information again. Typically in the first SIB - the SIB1 - the value tag, known under the name "*systemInfoValueTag*", it is indicated by an incrementing number a change of system information compared to previous broadcasts. If one value in the complete set of SIBs is changed, the value tag is incremented.
This means, that by reading only the SIB1 - which is remarkably faster achieved than the whole set of SIBs - the UE knows by comparing with the stored system information, if it is time for reading the complete set of system information again, as long it needs an up to date set.
For optimized reception of the system information, the UE determines in step S4 the start of the broadcast channel modification period.
The UE is able to derive the beginning and duration of the broadcast channel modification period from network specific information like the paging cycle and the received system frame number (SFN) or information related to system information periodicity of any system information window. Such information is in particular a certain time needed for transmitting one or many system information messages corresponding in particular to one complete set of system information.
These information elements are preferably stored in the storage unit 6 baed on the initially received complete set of system information.

When the broadcast channel modification period is determined, the user equipment determines in step S5 based on these information - preferably in conjunction with the estimated duration of receiving the system information - a starting point for reading the system information. Preferably the starting point is positioned in an interval right after the start of the broadcast channel modification period, where still the remaining broadcast channel modification period is longer than the duration for reception of the system information. Finally the process flow jumps back to step S2 and receives in line with the determined start point of reading the SIBs the complete set of system information again. When a data transmission e.g. of sensor data is planned, this is now occurring right after step S2 resp. S3. Additionally it is assured that in the storage unit 6 always up to date system information are available. With that process it is assured that with one try the UE is capable of reading the complete system information exactly when it needs to. This avoids futile reception attempts which unnecessarily consume power. Hence an optimized way of receiving system information is achieved with this embodiment of proposed inventive method.

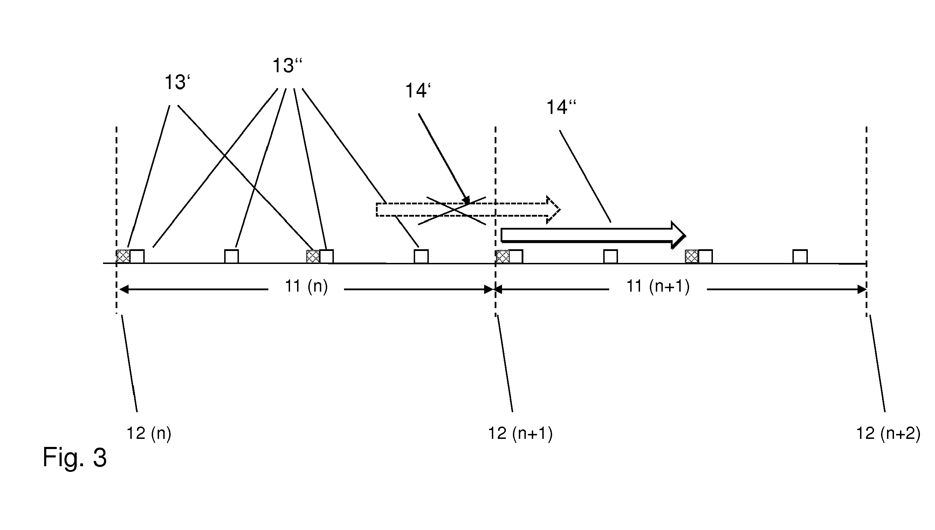

In FIG. 3 it is shown in a time diagram the effect of the inventive method for a limited-bandwidth user equipment 1 camping on a base station. It is shown two successive broadcast channel modification periods 11, indicated by the ordering indices 11 (n) and 11(n+1). The passing time is indicated from left to right.
Each broadcast channel modification period is delimited by the broadcast channel modification period border 12, here 12(n), 12 (n+1), 12(n+2).
During one broadcast channel modification period 11 system information 13, 13 is submitted from the active base station for reception of each user equipment camping on the respective base station. This in particular applies to devices which belong to a certain group of devices for which the system information is dedicated. This is in particular true for limited-bandwidth devices, resp. MTC devices.

The system information 13 is split into a couple of system information blocks 13', 13". Each system information block 13', 13" is preferably submitted multiple times during one broadcast channel modification period 11.
An enhanced coverage user equipment requires a couple of repetitions of reading the system information blocks 13', 13". This number of repetitions leads to a specific duration for a successful SIB reception attempt 14', 14" for each individual device.
It is now dependent upon the start of reading the system information blocks, if the reading can successfully be concluded during one broadcast channel modification period 11.
A not optimized SIB reception attempt 14' according to prior art would statt in broadcast channel modification period 11 (n). It would end in broadcast channel modification period 11(n+1). The user equipment would need to discard the received system information as a change between broadcast channel modification period 11 (n) and 11(n+1) might have happened. Hence, it is not clear if coherent system information is read, and if included data are up to date. The invested power resources for receiving the system information during SIB reception attempt 14' are therefore invested in vain. However, SIB reception attempt 14" according to a preferred embodiment of the inventive method orients on the start 12(n+1) of the broadcast channel modification period 11 (n+1). As shown before, the point in time of the start of the broadcast channel modification period is determined from previously stored system information received in an initial reception attempt.
With that information, the user equipment is put into the position to only start receiving system information when it is able to successfully conclude this SIB reception attempt 14". In effect, it is assured that with one SIB reception attempt 14" system information is successfully received by the UE.

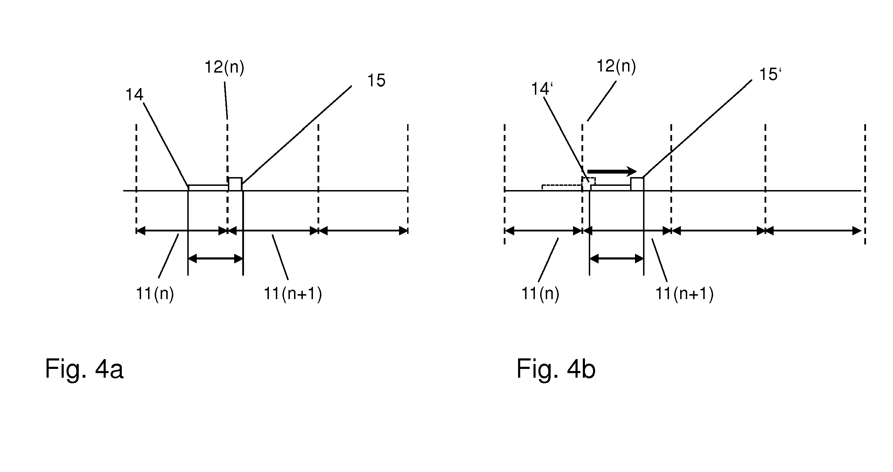

FIG. 4a and 4b show for a preferred embodiment of the inventive method how further to take into account a scheduled data transmission in the determination of the start of reading system information.

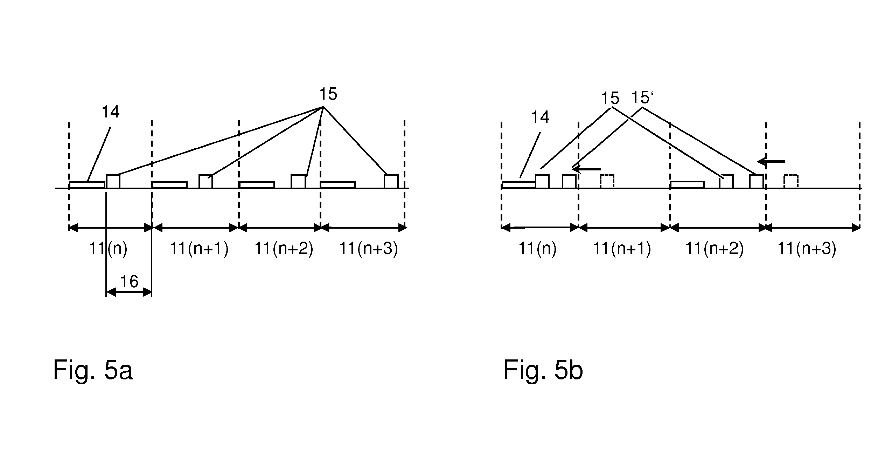

FIG. 4a shows the situation of two successive broadcast channel modification periods 11 (n), 11(n+1), separated by the broadcast channel modification period border 12(n). Although the SIB reception attempt 14 manages to be concluded prior to the broadcast channel modification period border 12(n), the directly following data transmission 15 would be situated already in the next broadcast channel modification period 11(n+1).
This is a problem, as technically speaking the data transmission can only be started when an up to date set of system information blocks was received by the UE, and consequently the UE knows from that if it is allowed to execute the data transmission. In particular when a barring indicator in the system information is set to true, the UE had to stop operating with the base station instead of starting a data transmission in broadcast channel modification period.
Hence, another SIB reception attempt 14 would be necessary, or at least the SIB1 needed to be read in order to figure out if the value tag indicates a change within the system information. This is disadvantageous as the first SIB reception attempt 14 was completely in vain and therefore wasted power resources.
To solve the issue, in FIG. 4b it is shown the embodiment of the inventive method, wherein additionally the imminent data transmission is taken into account for determining the start time of reading the system information. This means, that the start time of the SIB reception attempt 14' is shifted beyond the next broadcast channel modification period border 12(n) and thus both the SIB reception attempt 14' and the data transmission 15' are completed during the broadcast channel modification period 11(n+1).
This helps reducing the amount of power needed for the whole operation.
An advanced embodiment of the inventive method is shown in FIG 5a. Following the shift of the SIB reception attempt 14, the start of the data transmission 15 is carried out according to a random value. With this random value the start of regular periodic data transmissions is positioned within an interval 16 within that the data transmission is able to be started during the same broadcast channel modification period 11 (n) as the SIB reception attempt 14.
The further determined information, in particular the start time of the broadcast channel modification period, the start time and the duration of the SIB reception attempt 14 are further to be taken into account for determining the start time of the data transmission.
The positioning of data transmissions 15 within the further displayed broadcast channel modification periods 11(n+1), 11(n+2), 11(n+3) shows exemplarily the way the data transmissions may be distributed. This is in particular advantageous for data transmissions of different UEs which have scheduled data transmissions practically at the same time and are situated in an area with similar enhanced coverage conditions.
FIG. 5b shows a further advantageous embodiment of the inventive method. It handles multiple regular data transmissions that way that a second data transmission 15' is shifted within the same broadcast channel modification period 11 (n) as the first data transmission 15. This is an example of shifting a data transmission ahead, in particular when the second data transmission 15' is scheduled.
Over the shown row of four broadcast channel modification periods 11 (n), 11 (n+1), 11 (n+2), 11 (n+3) four data transmissions 15, 15' are distributed that way that only two times the system information need to be received with a SIB reception attempt 14, provided the SIB1 indicates a change. Compared to the situation of equally distributed data transmissions 15, 15' the efforts for receiving system information, at least the SIB1, is halved.

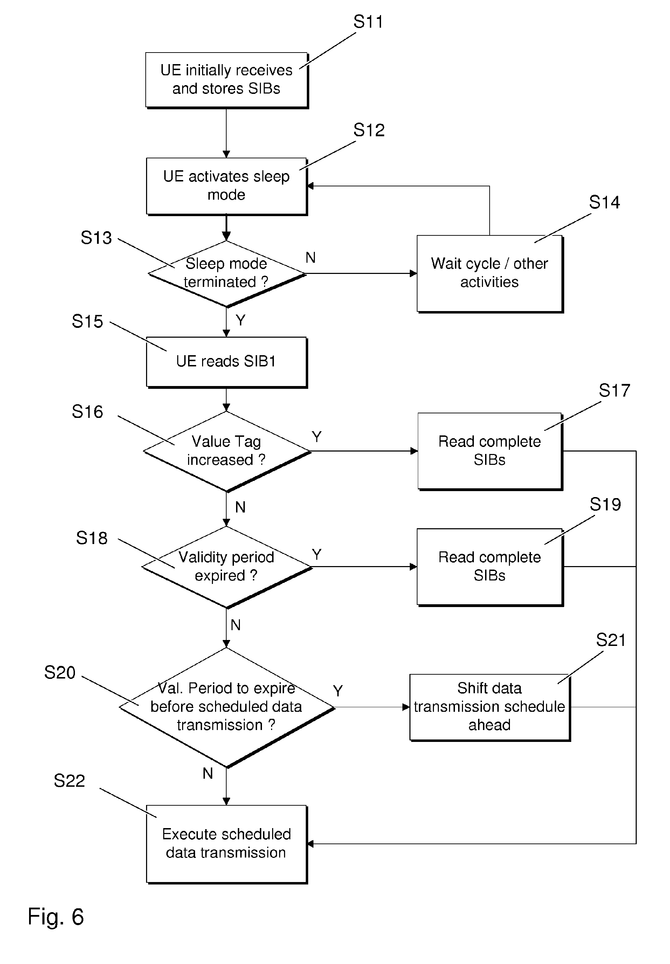

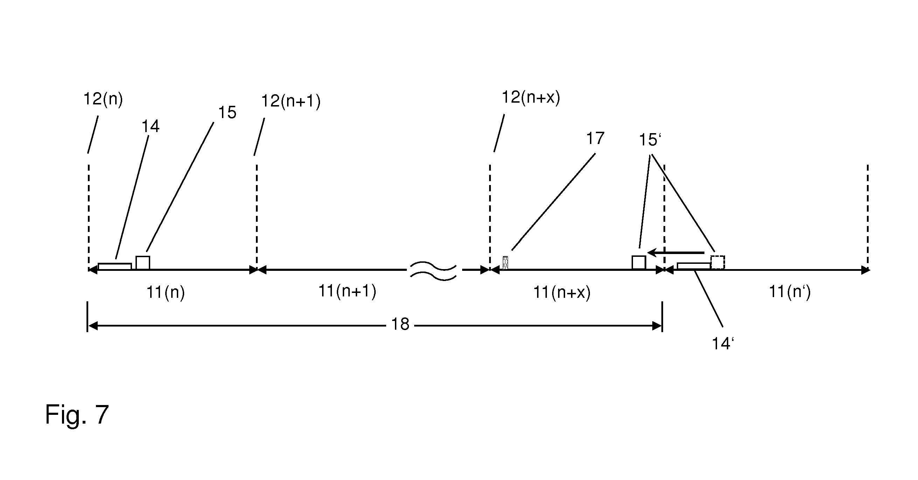

FIG. 6 and FIG. 7 exemplarily show the further advantageous embodiment of the inventive method wherein the validity period of the system information is considered for shifting a data transmission.
The validity period 18 of system information depict the duration that has to expire until previously received system information are latest outdated. Even when the BCCH value tag has not changed, the previously received system information needs to be discarded and a new SIB reception attempt 14' needs to be carried out.

The validity period 18 is typically preconfigured for the wireless cellular network. Further it preferably is applicable to a certain class of devices, in particular MTC devices. Typically the validity period 18 lasts a couple of hours.
In the flow chart of FIG. 6 the process flow starts with step S11 and a UE which - like shown in FIG. 2 - camps on an active base station and initially receives and stores a complete set of system information blocks. This initial SIB reception attempt 14 is preferably terminated within the broadcast channel modification period 11 (n).
Following this initialization the UE activates a sleep mode in step S12. Steps S13 and S14 check if the sleep mode is continued and carry out other activities which could lead to a trigger for ending the sleep mode. In effect the sleep mode - permanent or with interruptions - lasts from broadcast channel modification period 11(n+1) to 11(n+x). During this time the UE in this exemplary embodiment does not carry out another SIB reception attempt 14. However another data transmission 15' is scheduled, in particular for transmitting sensor data or other non momentary payload.
For doing so, in step S15 the UE reads first the SIB1 17, preferably after the broadcast channel modification period border 12(n+x). Should the value tag received with SIB1 have increased compared to the value tag stored before with the system information, then in step S16 it is decided to receive again the complete set of SIBs in SIB reception attempt 14'. Preferably - in particular when the data transmission is planned within the next broadcast channel modification period 11 (n'), the SIB reception attempt 14' is executed in step S17 within the broadcast channel modification period 11 (n'). Otherwise, the validity period 18 is checked in step S18. If the validity period 18 already expired when the SIB1 17 was read, then the previously stored system information is discarded and a new SIB reception attempt 14 is carried out in step S19, again taking into account the start of the broadcast channel modification period 11 (n') based on the stored system information. When the process flow in step S18 decides for the No-branch, the situation is present of an equal value tag compared to the initial SIB reception attempt 14 and a not expired validity period since initially receiving the SIBs. In that situation it is checked in step S20 if the scheduled data transmission is scheduled for a time beyond the end of the validity period 18. If so - and preferably if the data transmission is able to be shifted - the scheduled data transmission 15' is shifted ahead to be carried out within the validity period 18, effectively before the end of the broadcast channel modification period 11(n+x). Hence the scheduled data transmission 15' is carried out without another SIB reception attempt 14.
It becomes apparent that by this embodiment the SIB reception attempt 14' is avoided and thus the method is advantageous in terms of power consumption.
It can easily be seen that the problem for the envisaged UEs with the known structure of SIBs and broadcast channel modification periods will be solved with the invention. This allows for the enhanced coverage devices an operation with an optimization in terms of power consumption, reliability and response times.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for receiving system information (13) by a user equipment (1) from a base station (8), the user equipment being a limited-bandwidth device, camping on the base station, the base station being part of a wireless cellular network,
wherein the system information are divided in a plurality of system information blocks (13', 13"), which each is at least once transmitted by the base station during one broadcast channel modification period (11),
the method comprising the step for the user equipment of:
- receiving initially the system information (13),
- storing data related to said system information,
after a period of at least one broadcast channel modification period (11) without reception of system information:
- determining start of broadcast channel modification period (11) considering said stored data, and
- determining start of reading system information in relation to said start of the broadcast channel modification period.

2. Method according to at least one of the previous claims,
further comprising the step for the user equipment (1) of determining the duration of receiving the system information (13), and
further considering for determination of the start of reading system information further said duration of receiving the system information.

3. Method according to at least one of the previous claims,
further comprising the step of determining the start time of a first data transmission (15) by the user equipment (1) considering the determined start of broadcast channel modification period (11).

4. Method according to at least one of the claims 1 to 3,
wherein determination of the start of reading system information (13) comprises shifting said reading allowing completion of reading of said system information within a single broadcast channel modification period (11).

5. Method according to at least one of the claims 3 and 4,
comprising for the user equipment the step of further considering for determining the first data transmission (15) start time the duration of receiving the system information and a random value.

6. Method according to at least one of the claims 3 to 5,
comprising for the user equipment the step of determining the start time of at least one second data transmission (15') considering a time related to the start time of the first data transmission (15) and a time related to the start time of a broadcast channel modification period (11).

7. Method according to at least one of the claims 3 to 6,
wherein for determination of the start time of at least one of the first or second data transmission (15, 15') further considering the validity period (18) of the stored system information (13).

8. Method according to at least one of the previous claims,
wherein the step of initially receiving system information (13) is conducted in conjunction with at least one out of the group of:
- camping of the user equipment (1) on the base station (8),
- registration of the user equipment in the wireless cellular network,
- starting up of the user equipment, and/or
- waking up of the user equipment from dormant mode.

9. Method according to at least one of the claims 2 to 8,
wherein the duration of receiving system information depends upon the repetitions conducted by the user equipment (1) for gaining sufficient confidence in decoding of the system information (13).

10. User equipment (1) configured for operating in camping relationship with a base station (8) of a wireless cellular network,
the user equipment being a limited-bandwidth device, and is configured to receive system information (13) from the base station (8), the system information is divided in a plurality of system information blocks (13', 13"), which each is at least once transmitted by the base station (8) during one broadcast channel modification period (11),
the user equipment further comprising at least a storage unit (6),
where the user equipment is further configured to:
- receive initially the system information,
- store data related to said system information in the storage unit (6),
after a period of at least one broadcast channel modification period (11) without reception of system information:
- determine start of broadcast channel modification period considering said stored data, and
- determine start of reading system information (13) in relation to said start of the broadcast channel modification period (11).

11. User equipment (1) according to claim 10,
further configured to determine the duration of receiving the system information (13), and
to consider for determination of the start of reading system information further said duration of receiving the system information.

12. User equipment (1) according to at least one of the claims 10 or 11, further configured to determine the start time of a first data transmission (15) by the user equipment (1) by means of considering the determined start of the broadcast channel modification period (11).

13. User equipment (1) according to claim 12,
further configured to determine the start time of at least one second data transmission (15') considering at least one out of a group of:
- a time related to the start time of the first data transmission (15),
- a time related to the start time of a broadcast channel modification period,
- the validity period (18) of the stored system information used for the first transmission (15).

14. User equipment (1) according to at least one of the claims 10 to 13, wherein the user equipment further comprises a transceiver unit (5) and a controlling unit (4),
and wherein the controlling unit (4) is configured to execute the determination of start time of reading system information and/or the determination of start time of a data transmission (15, 15'); and
the transceiver unit (5) is configured to execute the reading of system information (13) and/or the reading of the data transmission (15, 15').

15. User equipment (1) according to at least one of the claims 10 to 14, wherein the user equipment further comprises a control appliance (2), wherein the control appliance (2) is configured to receive from the controlling unit (4) information related to the determined start of the broadcast channel modification (11) period and/or the validity period (18) of said stored system information (13).
